(19) 

**Europäisches Patentamt**
**European Patent Office**
**Office européen des brevets**

(11) **EP 4 123 263 A1**

(12) **EUROPEAN PATENT APPLICATION**
published in accordance with Art. 153(4) EPC

(43) Date of publication:
**25.01.2023 Bulletin 2023/04**

(21) Application number: **20957438.3**

(22) Date of filing: **06.11.2020**

(51) International Patent Classification (IPC):
$G01C\ 21/32^{(2006.01)}$     $G01C\ 21/34^{(2006.01)}$
$G01S\ 19/42^{(2010.01)}$     $G01S\ 15/06^{(2006.01)}$
$G01S\ 15/86^{(2020.01)}$     $G01S\ 17/06^{(2006.01)}$
$G01S\ 17/86^{(2020.01)}$

(86) International application number:
**PCT/CN2020/126931**

(87) International publication number:
**WO 2022/077660 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2020 CN 202011105411**

(71) Applicant: **Guangzhou Xiaopeng Autopilot Technology Co., Ltd.**
**Guangzhou, Guangdong 510640 (CN)**

(72) Inventors:
• **LI, Hongjun**
**Guangzhou, Guangdong 510640 (CN)**
• **LIU, Zhongyuan**
**Guangzhou, Guangdong 510640 (CN)**
• **CHAI, Wennan**
**Guangzhou, Guangdong 510640 (CN)**
• **HUANG, Ya**
**Guangzhou, Guangdong 510640 (CN)**

(74) Representative: **Isarpatent**
**Patent- und Rechtsanwälte Barth Charles Hassa Peckmann & Partner mbB Friedrichstrasse 31 80801 München (DE)**

(54) **VEHICLE POSITIONING METHOD AND APPARATUS**

(57)    Embodiments of the present invention provide a method and a device for positioning vehicle. The method includes steps of: obtaining preset first map data and second map data acquired in real time; determining a first semantic element according to the first map data, and determining first direction information and first position information corresponding to the first semantic element; determining a second semantic element according to the second map data, and determining second direction information and second position information corresponding to the second semantic element; determining optimal heading information of the vehicle according to the first direction information and the second direction information; and determining optimal position information of the vehicle, according to the first position information, the second position information, and the optimal heading information. The determining of the optimal heading information and optimal position information is achieved by the embodiments of the present invention. Positioning error of the vehicle is reduced by performing the positioning based on the optimal heading information and the optimal position information and positioning accuracy of the vehicle is improved.

FIG. 1a

## Description

### CROSS-REFERENCE TO RELATED APPLICATION

This application claims the priority of Chinese Patent Application No. 202011105411.9 filed on October 15, 2020, which is incorporated herein by reference in its entirety for all purposes.

### TECHNICAL FIELD

The present invention relates to the technical field of positioning, and in particular, to a method and a device for positioning vehicle.

### DESCRIPTION OF THE RELATED ART

When vehicle is being driven, it is often necessary to position the vehicle. Especially for autonomous or unmanned vehicles, positioning accuracy of the vehicle will affect driving safety of the vehicle.

However, in a prior art, the vehicle can acquire information around the vehicle, such as lane lines, parking slots, etc., and then can be positioned according to feature points in the acquired information. However, due to a limited acquired range of the vehicle, a number of the acquired feature points is not much, resulting in deviations of the positioning if the positioning is performed only based on the feature points. Moreover, one feature point contains not much information, and thus it is difficult to completely represent the information acquired by the vehicle, resulting in inaccurate positioning.

### SUMMARY

In view of the above problems, the present invention provides a method and a device for positioning vehicle which is used to at least partly solve or alleviate the above-mentioned problems in the prior art.

A method for positioning vehicle is provided herein, the method comprising:

obtaining preset first map data and second map data acquired in real time;
determining a first semantic element according to the first map data, and determining first direction information and first position information corresponding to the first semantic element;
determining a second semantic element according to the second map data, and determining second direction information and second position information corresponding to the second semantic element;
determining optimal heading information of the vehicle according to the first direction information and the second direction information;
determining optimal position information of the vehicle, according to the first position information, the second position information, and the optimal heading information.

Optionally, the first semantic element comprises a first point semantic element, and the step of determining the first direction information corresponding to the first semantic element comprises:

determining first barycentric information corresponding to a plurality of point semantic elements comprising the first point semantic element; and
determining the first direction information corresponding to the first point semantic element, according to the first barycentric information;
wherein the second semantic element comprises a second point semantic element, and the step of determining the second direction information corresponding to the second semantic element comprises:

determining second barycentric information corresponding to a plurality of point semantic elements comprising the second point semantic element; and
determining the second direction information corresponding to the second point semantic element, according to the second barycentric information.

Optionally, the first semantic element further comprises a first line semantic element, the first position information comprises first lateral position information, and the step of determining the first position information corresponding to the first semantic element comprises:

determining first midpoint position information corresponding to the first line semantic element;
determining the first lateral position information corresponding to the first line semantic element, according to the first midpoint position information.

Optionally, the second semantic element further comprises a second line semantic element, the second position information comprises second lateral position information, and the step of determining the second position information corresponding to the second semantic element comprises:

determining the second midpoint position information corresponding to the second line semantic element; and
determining the second lateral position information corresponding to the second line semantic element, according to the second midpoint position information.

Optionally, the step of determining the optimal heading information of the vehicle according to the first direction information and the second direction information comprises:

determining direction information for the point semantic element and direction information for the line semantic element, according to the first direction information and the second direction information;
determining direction weight information corresponding to the direction information for the line semantic element; and
determining the optimal heading information of the vehicle by combining the direction information for the point semantic element, the direction information for the line semantic element, and the direction weight information.

Optionally, the step of determining the optimal position information of the vehicle according to the first position information, the second position information, and the optimal heading information comprises:

determining position information for the point semantic element and position information for the line semantic element according to the first position information, the second position information, and the optimal heading information;
determining position weight information corresponding to the position information for the line semantic element; and
determining the optimal heading information of the vehicle by combining the position information for the point semantic element, the position information for the line semantic element, and the position weight information.

Optionally, the step of determining the first semantic element according to the first map data comprises:

classifying semantic elements in the first map data; and
generating a first point semantic element and a first line semantic element corresponding to a first shape semantic element in the first map data;
wherein the step of determining of the second semantic element according to the second map data comprises:

classifying semantic elements in the second map data; and
generating a second point semantic element and a second line semantic element corresponding to a second shape semantic element in the second map data.

Optionally, it further comprises:

determining residual information between the first semantic element and the second semantic element;

screening the first semantic element and the second semantic element according to the residual information; and
updating the optimal heading information and the optimal position information according to the screened first semantic element and the screened second semantic element.

A device for positioning vehicle is provided herein, the device comprising:

a map data obtaining module, configured to obtain preset first map data and second map data acquired in real time;
a first semantic element determining module, configured to determine a first semantic element according to the first map data, and to determine first direction information and first position information corresponding to the first semantic element;
a second semantic element determining module, configured to determine a second semantic element according to the second map data, and to determine second direction information and second position information corresponding to the second semantic element;
an optimal heading information determining module, configured to determine optimal heading information of the vehicle according to the first direction information and the second direction information; and
an optimal position information determining module, configured to determine optimal position information of the vehicle according to the first position information, the second position information, and the optimal heading information.

A vehicle is provided herein, wherein it comprises a processor, a memory, and a computer program stored in the memory and capable of being executed on the processor, and the computer program when executed by the processor, implements any of the methods for positioning vehicle as described above.
A computer-readable storage medium is provided herein, wherein a computer program is stored on the computer-readable storage medium, and the computer program when executed by a processor, implements any of the methods for positioning vehicle as described above.
The embodiments of the present invention have the following advantages:
In the embodiments of the present invention, the determining of the optimal heading information and the optimal position information is achieved by: obtaining preset first map data and second map data acquired in real time; determining a first semantic element according to the first map data, and determining first direction information and first position information corresponding to the first semantic element; determining a second semantic element according to the second map data, and determining second direction information and second position information and second position information corresponding to the second semantic element; determining optimal heading information of the vehicle according to the first direction information and the second direction information; and determining optimal position information of the vehicle, according to the first position information, the second position information, and the optimal heading information. Positioning error of the vehicle is reduced by performing the positioning based on the optimal heading information and the optimal position information and positioning accuracy of the vehicle is improved.

**BRIEF DESCRIPTION OF THE DRAWINGS**

In order to more clearly explain technical solutions of the present invention, drawings used in the description of the present invention are briefly described below. Apparently, the drawings as described below are merely some embodiments of the present invention. Based on these drawings, other drawings can be obtained by those skilled in the art without creative effort.

FIG. 1a is a flowchart illustrating steps of a method for positioning vehicle according to an embodiment of the present invention;

FIG. 1b is a schematic diagram of classification of semantic elements according to an embodiment of the present invention;

FIG. 2 is a flowchart illustrating steps of another method for positioning vehicle according to an embodiment of the present invention;

FIG. 3a is a flowchart illustrating steps of still another method for positioning vehicle according to an embodiment of the present invention;

FIG. 3b is a schematic diagram of screening of semantic elements according to an embodiment of the present invention;

FIG. 4 is a schematic diagram of an example of a method for positioning vehicle according to an embodiment of the present invention; and

FIG. 5 is a structural schematic diagram of a device for positioning vehicle according to an embodiment of the present invention.

**DETAILED DESCRIPTION OF EXEMPLARY EMBODIMENTS**

The present invention is further described in detail below in conjunction with the accompanying drawings and specific embodiments, in order to make the above objects, features and advantages of the present invention to become more apparent and easy to understand. Apparently, embodiments described herein are only part of embodiments of the present invention and are not all embodiments of the present invention. Based on the embodiments of the present invention, other embodiments obtained by those skilled in the art without creative labor are within the protection scope of the present invention.

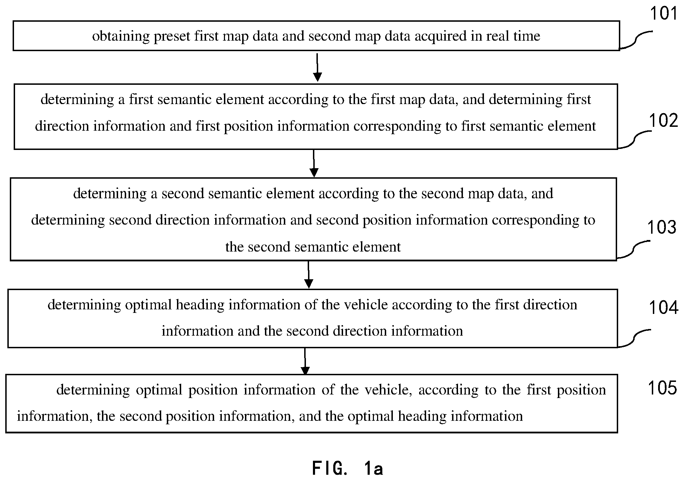

Referring to FIG. 1a, it is a flowchart illustrating steps of a method for positioning vehicle according to an embodiment of the present invention. The method specifically includes following steps:

At a step 101, preset first map data and second map data acquired in real time are obtained.

The first map data and the second map data can be map data for a parking lot. The first map data can be a semantic map obtained after multiple fusions in a server, and the second map data can be a semantic map acquired by the vehicle in real time. The semantic map can be a map including one or more semantic elements, and the semantic elements can include lane lines, parking slots, roadblocks, speed bumps, and the like.

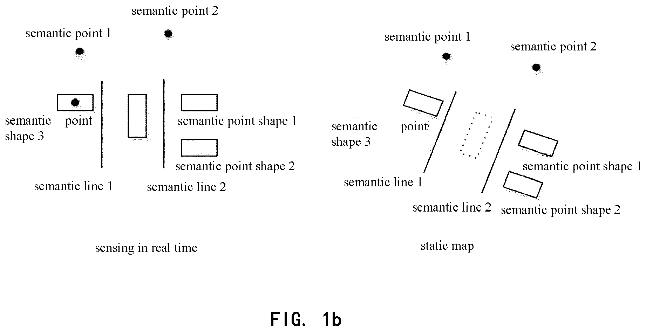

As shown in FIG. 1b, the first map data can be a static map, and the second map data can be a real-time sensing map.

During driving the vehicle, an area where the vehicle is located can be determined by a positioning function in the vehicle, such as GPS (Global Positioning System), and then a semantic map of the area can be obtained from the server. It is also possible that a plurality of semantic maps are obtained from the server in advance, so that the semantic map of the area can be called after determining the area where the vehicle is located.

After acquiring the first map data, the semantic elements of the area where the vehicle is located can be acquired in real time by a sensing apparatus in the vehicle, and then a semantic map can be generated according to the semantic elements, that is, the second map data is generated.

The sensing apparatus can include an ultrasonic sensor, an infrared sensor, a camera, and the like.

In an embodiment of the present invention, the sensing apparatus can have a certain acquired range, for example, the acquired range may be 25 meters, and the acquired semantic elements may be semantic elements within 25 meters.

At a step 102, a first semantic element is determined according to the first map data, and first direction information and first position information corresponding to the first semantic element are determined.

After obtaining the first map data and the second map data, all semantic elements in the second map data can be determined, and in turn, semantic elements in the first map data which match the semantic elements in the second map data, can be determined.

In practical applications, since the first map data can be a map for the area where the vehicle is located, such as a parking lot, all semantic elements in the area where the vehicle is located can be determined, while the second map data can be a map acquired by the vehicle in real time. Because the sensing apparatus has a certain sensing range, it is the semantic elements within the sensing range that are determined in the map acquired by the vehicle in real time. That is, the number of the semantic elements in the second map data should be less than or equal to that of the semantic elements in the first map data. Thus, the semantic elements matching the semantic elements in the second map data can be determined from all semantic elements in the first map data.

After the matching semantic elements are determined, any one of the matching semantic elements in the first map data can be determined, and then the direction information and position information of the matching semantic element can be determined.

In practical applications, a coordinate system can be set in the first map data, and then coordinate information of the semantic element in the coordinate system can be determined, and the direction information and position information of the semantic element can be determined according to the coordinate information. The direction information can be angle information of the semantic element in the coordinate system.

As an example, semantic elements can include point semantic elements and line semantic elements. As shown in FIG. 1b, a semantic point may be a point semantic element, and a semantic line may be a line semantic element.

In an embodiment of the present invention, the first semantic element can include a first point semantic element, and direction information and position information of the first point semantic element can be determined respectively. The step 102 can include following substeps:

At a sub-step 11, first barycentric information which corresponds to a plurality of point semantic elements including the first point semantic element, is determined.

The point semantic elements can include corner points of the parking slot and similar semantic elements. The barycentric information can be a point with a shortest distance from the plurality of point semantic elements.

Since the first semantic element can include the first point semantic element, after the first semantic element has been determined, the first point semantic element in the first semantic element can be determined. Thus, all of point semantic elements in the first map data can be determined. And, corresponding barycentric information is determined according to the coordinate information of all point semantic elements.

In practical applications, the barycentric information can be determined by a formula as follows:

$$G = \frac{1}{n} \sum_{i=1}^{n} p_i$$

where $p_i$ can be coordinate information of a point semantic element i in the first map data; n can be expressed as the number of matching point semantic elements, that is, there can be n point semantic elements in the first map data; and G can be expressed as a barycenter of all point semantic elements in the first map data.

At a sub-step 12, the first direction information corresponding to the first point semantic element is determined according to the first barycentric information.

After the first barycentric information has been determined, direction vector of the point semantic element, i.e., direction information of the point semantic element, can be determined according to the barycentric information and the coordinate information of the point semantic element. Specifically, it can be determined by a formula as follows:

$$q_i = G - p_i$$

Where $q_i$ can be vector information of the point semantic element i in the first map data, that is, direction information.

In an embodiment of the present invention, the position information of the point semantic element in the first map data can be determined according to the coordinate information of the point semantic element in the first map data. For example, the position information of the point semantic element in the first map data can be the coordinate information of the point semantic element in the first map data.

In an embodiment of the present invention, the first semantic element can include a first line semantic element, and direction information and position information of the first line semantic element can be determined respectively. The step 102 can include following substeps:

At a sub-step 21, first midpoint position information corresponding to the first line semantic element is determined.

The line semantic elements can include location lines of parking slots, roadblocks, and similar semantic elements.

Since the first semantic element can include the first line semantic element, after the first semantic element has been determined, the first line semantic element in the first semantic element can be determined. Thus, coordinate information of the midpoint of the first semantic elements, i.e., the position information of the midpoint, can be determined.

At a sub-step 22, first lateral position information corresponding to the first line semantic element is determined according to the first midpoint position information.

After the first midpoint position information has been determined, lateral coordinate information of the midpoint can be determined according to coordinate information of the midpoint. For example, the coordinate information of the midpoint can include horizontal coordinate information and vertical coordinate information, and thus the horizontal coordinate information of the midpoint can be determined as the first lateral position information.

In an embodiment of the present invention, direction information of a second line semantic element can be vector information of the line semantic element, which can be determined by position information of a plurality of points in the line semantic element.

In an embodiment of the present invention, the semantic element can further include shape semantic element. The step 102 can include following sub-steps: At a sub-step 31, semantic elements in the first map data are classified.

After obtaining the first map data, point semantic elements, line semantic elements, and shape semantic elements can be determined, and semantic elements are classified according to different classes of semantic elements.

As shown in Fig. 1b, the shape of the semantic point can be a shape semantic element; the first map data can include a point semantic element 1, a point semantic element 2, a line semantic element 1, a line semantic element 2, a shape semantic element 1, a shape semantic element 2 and a shape semantic element 3; and thus it can be determined that the point semantic element 1 and the point semantic element 2 belong to a same one class, the line semantic element 1 and the line semantic element 2 belong to a same one class, and the shape semantic element 1, the shape semantic element 3 and the shape semantic element 2 belong to a same one class.

At a sub-step 32, a first point semantic element and a first line semantic element corresponding to a first shape semantic element in the first map data are generated, with respect to the first shape semantic element in the first map data.

After the semantic elements are classified, any one of the shape semantic elements can be decomposed to determine points and lines in the shape semantic element, and then the point semantic element and the line semantic element can be generated according to the points and lines in the shape semantic element.

For example, the shape semantic element 1 can be a rectangle, and then the rectangle can be decomposed into four points and four lines, and four point semantic elements and four line semantic elements can be generated according to the four points and four lines.

In practical applications, the positioning is performed according to the feature points in the acquired information. Even if the acquired information is information with a specific shape, such as a rectangular parking slot, only the feature points in the information with the specific shape are determined for positioning. If the positioning is performed according to a midpoint of the rectangular parking slot, the positioning accuracy is low. However, the positioning accuracy can be improved by determining points and lines in the information with the specific shape and performing positioning based on the points and lines.

At a step 103, a second semantic element is determined according to the second map data, and second direction information and second position information corresponding to the second semantic element are determined.

After obtaining the first map data and the second map data, all semantic elements in the second map data can be determined, and in turn, semantic elements in the first map data which match the semantic elements in the second map data, can be determined.

In practical applications, since the first map data can be a map for the area where the vehicle is located, such as a parking lot, all semantic elements in the area where the vehicle is located can be determined, while the second map data can be a map acquired by the vehicle in real time. Because the sensing apparatus has a certain sensing range, it is the semantic elements within the sensing range that are determined in the map acquired by the vehicle in real time. That is, the number of the semantic elements in the second map data should be less than or equal to that of the semantic elements in the first map data. Thus, the semantic elements matching the semantic elements in the second map data can be determined from all semantic elements in the first map data.

After the matching semantic element is determined, any one of the matching semantic elements in the first map data can be determined, and then the direction information and position information of the matching semantic element can be determined.

In practical applications, a coordinate system can be set in the first map data, and then coordinate information of the semantic element in the coordinate system can be determined, and the direction information and position information of the semantic element can be determined according to the coordinate information. The direction information can be angle information of the semantic element in the coordinate system.

As an example, semantic elements can include point semantic elements and line semantic elements. As shown in FIG. 1b, a semantic point may be a point semantic element, and a semantic line may be a line semantic element.

In an embodiment of the present invention, the second semantic element can include a second point semantic element, and direction information and position information of the second point semantic element can be determined respectively. The step 102 can include following sub-steps: At a sub-step 41, second barycentric information, corresponding to a plurality of point semantic elements including the second point semantic element, is determined.

Since the second semantic element can include the second point semantic element, after the second semantic element has been determined, the second point semantic element in the second semantic element can be determined. Thus, all of point semantic elements in the second map data can be determined. And, corresponding barycentric information is determined according to the coordinate information of all point semantic elements.

In practical applications, the barycentric information can be determined by a formula as follows:

$$G' = \frac{1}{n}\sum_{i=1}^{n} p_i'$$

where $p_i$ can be coordinate information of a point semantic element i in the second map data; n can be expressed as the number of matching point semantic elements, that is, there can be n point semantic elements in the first map data; and $G'$ can be expressed as a barycenter of all point semantic elements in the second map data.

At a sub-step 42, the second direction information corresponding to the second point semantic element is determined according to the second barycentric information.

After the second barycentric information has been determined, direction vector of the point semantic element, i.e., direction information of the point semantic element, can be determined according to the barycentric information and the coordinate information of the point semantic element. Specifically, it can be determined by a formula as follows:

$$q_i' = G' - p_i'$$

Where $q_i'$ can be vector information of the point semantic element i in the second map data, that is, direction information; and $p_i'$ can be coordinate information of the point semantic element i in the second map data.

In an embodiment of the present invention, the position information of the point semantic element in the second map data can be determined according to the coordinate information of the point semantic element in the second map data. For example, the position information of the point semantic element in the second map data can be the coordinate information of the point semantic element in the second map data.

In an embodiment of the present invention, the second semantic element can include a second line semantic element, and direction information and position information of the second line semantic element can be determined respectively. The step 102 can include following sub-steps:
At a sub-step 51, second midpoint position information corresponding to the second line semantic element is determined.

The line semantic elements can include location lines of parking slots, roadblocks, and similar semantic elements.

Since the second semantic element can include the second line semantic element, after the second semantic element has been determined, the second line semantic element in the second semantic element can be determined. Thus, coordinate information of the midpoint of the second semantic elements, i.e., the position information of the midpoint, can be determined.

At a sub-step 52, second lateral position information corresponding to the second line semantic element is determined according to the second midpoint position information.

After the second midpoint position information has been determined, lateral coordinate information of the midpoint can be determined according to coordinate information of the midpoint. For example, the coordinate information of the midpoint can include horizontal coordinate information and vertical coordinate information, and thus the horizontal coordinate information of the midpoint can be determined as the second lateral position information.

In an embodiment of the present invention, direction information of the second line semantic element can be vector information of the line semantic element, which can be determined by position information of a plurality of points in the line semantic element.

In an embodiment of the present invention, the second semantic elements include the second point semantic element(s) and the second line semantic element(s). The step 103 can include following sub-steps:
At a sub-step 61, semantic elements in the second map data are classified.

After obtaining the second map data, point semantic elements, line semantic elements, and shape semantic elements can be determined, and semantic elements are classified according to different types of the semantic elements.

At a sub-step 62, a second point semantic element and a second line semantic element corresponding to a second shape semantic element in the second map data are generated, with respect to the second shape semantic element in the second map data.

After the semantic elements are classified, any one of shape semantic elements can be decomposed to determine points and lines in the shape semantic element, and then the point semantic element and the line semantic element can be generated according to the points and lines in the shape semantic element.

At a step 104, optimal heading information of the vehicle is determined according to the first direction information and the second direction information.

After the first direction information and the second direction information are determined, angle deflection information of the second semantic element, i.e., the angle deflection information of the semantic elements sensed in real time, can be determined by combining the first direction information and the second direction information of a plurality of matching semantic elements. Thus, the second semantic element can be deflected according to the angle deflection information to determine the optimal heading information of the vehicle in the first map data.

In an embodiment of the present invention, the optimal heading information of the vehicle can be determined based on the direction information of the point semantic element, which can be determined by a formula as follows:

$$F_{p\_theta} : \min_{R} J = \frac{1}{2}\sum_{i=1}^{n}\left\| (p_i - G) - R * (p_i' - G') \right\|^2$$

Where $F_{p\_theta}$ can be the optimal heading information of the point semantic element; $p_i'$ can be the coordinate information of the point semantic element i in the second map data; $p_i$ can be the coordinate information of the point semantic element i in the first map data; $G$ can be expressed as the barycenter of all point semantic elements in the first map data; $G'$ can be expressed as the barycenter of all point semantic elements in the second map data; $R$ can be a transformation matrix for different matching point semantic elements with each other, i.e., the angle deflection information, and the transformation matrix can be determined according to the coordinate information of the point semantic elements; and min $J$ can be overall error of the point semantic elements.

In practical applications, the transformation matrix where the overall error of the point semantic elements is the smallest can be determined, and then all the second semantic elements can be deflected according to the transformation matrix to determine the optimal heading information of the vehicle in the first map data.

In an embodiment of the present invention, the optimal heading information of the vehicle can be determined based on the direction information of the line semantic element, which can be determined by a formula as follows:

$$F_{l\_theta} : \min_{R} J = \frac{1}{2}\sum_{i=1}^{n}\left\| v_i - R * v_i' \right\|^2$$

Where $F_{l\_theta}$ can be the optimal direction information of the line semantic element; $v_i$ can be the line semantic element i in the first map data; $v_i'$ can be the line semantic element i in the second map data; n can be expressed as the number of the matching line semantic elements; R can be a transformation matrix for different matching line semantic elements with each other, that is, angle deflection information, and the transformation matrix can be determined according to the position information of the line semantic elements; and min $J$ can be overall error of the line semantic elements.

In practical applications, the transformation matrix where the overall error of the line semantic elements is the smallest, can be determined, and then all the second semantic elements can be deflected according to the transformation matrix to determine the optimal heading information of the vehicle in the first map data.

At a step 105, optimal position information of the vehicle is determined according to the first position information, the second position information, and the optimal heading information.

After the first position information and the second position information are determined, position offset information of the second semantic element, i.e., position offset information of the semantic elements sensed in real time, can be determined by combining the first position information and the second position information of a plurality of matching semantic elements. Thus, the second semantic element can be displaced according to the position offset information to determine the optimal position information of the vehicle in the first map data.

In an embodiment of the present invention, the optimal position information of the vehicle can be determined based on the position information of the point semantic element, which can be determined by a formula as follows:

$$F_{p\_loc} : \min_{t} J = \frac{1}{2}\sum_{i=1}^{n}\left\| G - R * G' - t \right\|^2$$

Where $F_{p\_loc}$ can be the optimal position information of the point semantic element; $G$ can be expressed as the barycenter of all point semantic elements in the first map data; $G'$ can be expressed as the barycenter of all point semantic elements in the second map data; R can be a transformation matrix for different matching point semantic elements with each other, that is, the angle deflection information, and the transformation matrix can be determined according to the coordinate information of the point semantic elements; t can be displacement amount for different matching point semantic elements with each other, i.e., the position offset information, and the value of the displacement amount can be determined according to the coordinate information of the point semantic element; and min $J$ can be overall error of the point semantic elements.

In practical applications, the displacement amount where the overall error of the point semantic elements is the smallest, can be determined, and then all the second semantic elements can be displaced according to the displacement amount to determine the optimal position information of the vehicle in the first map data.

In an embodiment of the present invention, the optimal position information of the vehicle can be determined based on the lateral position information of the line semantic element, which can be determined by a formula as follows:

$$F_{l\_loc} : \min_{R,t} J = \frac{1}{2}\sum_{i=1}^{n}\left\| (A_i - R * A_i' - t) \times v_i \right\|^2$$

Where $F_{l\_loc}$ can be the optimal lateral position information of the line semantic element; $A_i$ can be the lateral position information of the line semantic element in the first map data; $A'_i$ can be the lateral position information of the line semantic element in the second map data; R can be a transformation matrix for different matching line semantic elements with each other, i.e., the angle deflection information, and the transformation matrix can be determined according to the lateral position information of the line semantic elements; t can be displacement amount for different matching point semantic elements with each other, i.e., position offset information, and the value of the displacement amount can be determined according to the coordinate information of the point semantic element; and *min J* can be overall error of the point semantic element.

In practical applications, the displacement amount where the overall error of the line semantic elements is the smallest, can be determined, and then all the second semantic elements can be displaced according to the displacement amount to determine the optimal lateral position information of the vehicle in the first map data.

In the embodiment of the present invention, the determining of the optimal heading information and the optimal position information is achieved by: obtaining preset first map data and second map data acquired in real time; determining a first semantic element according to the first map data, and determining first direction information and first position information corresponding to the first semantic element; determining a second semantic element according to the second map data, and determining second direction information and second position information corresponding to the second semantic element; determining optimal heading information of the vehicle according to the first direction information and the second direction information; and determining optimal position information of the vehicle, according to the first position information, the second position information, and the optimal heading information. Positioning error of the vehicle is reduced by performing the positioning based on the optimal heading information and the optimal position information and positioning accuracy of the vehicle is improved.

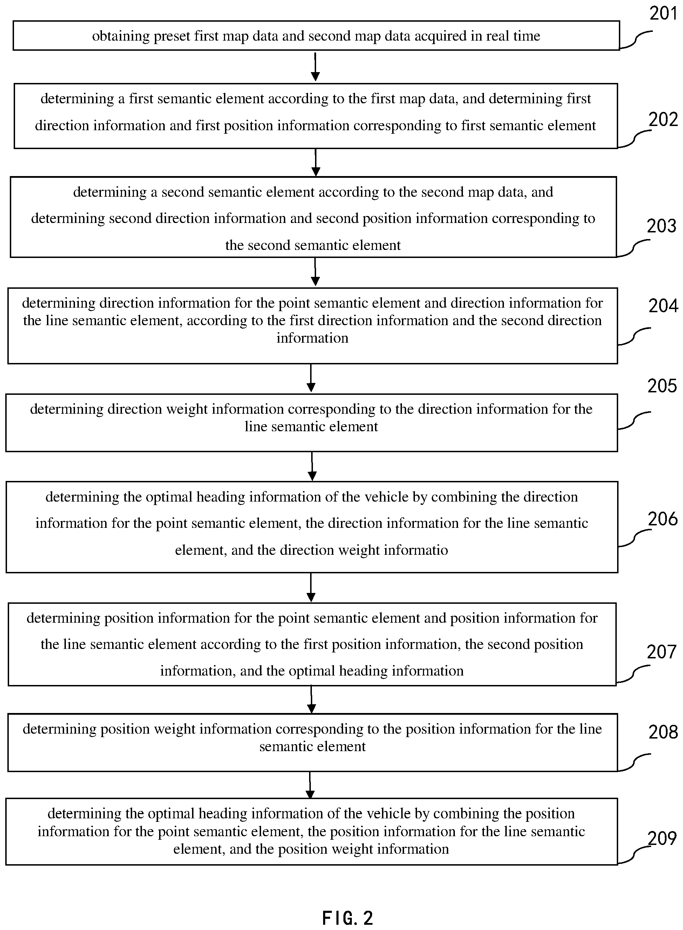

Referring to FIG. 2, it is a flowchart illustrating steps of another method for positioning vehicle according to an embodiment of the present invention. The method specifically includes following steps:

At a step 201, preset first map data and second map data acquired in real time are obtained.

At a step 202, a first semantic element is determined according to the first map data, and first direction information and first position information corresponding to the first semantic element are determined.

At a step 203, a second semantic element is determined according to the second map data, and second direction information and second position information corresponding to the second semantic element are determined.

At a step 204, direction information for the point semantic element and direction information for the line semantic element are determined according to the first direction information and the second direction information.

After the first direction information is determined, all matching point semantic elements in the first map data can be determined, and corresponding barycenter can be determined according to all the point semantic elements, and then the direction information for the point semantic element, which can be specifically $F_{p\_theta}$, can be determined according to the barycenter.

After the second direction information is determined, vector information of the line semantic element, i.e., the direction information for line semantic element, which can specifically be $F_{l\_theta}$, can be determined by the position information of a plurality of points in the line semantic element.

At a step 205, direction weight information corresponding to the direction information for the line semantic element is determined.

After the direction information for the line semantic element is determined, the weight information of the direction information for the line semantic element can be determined according to the acquired range of the sensing apparatus in the vehicle. For example, when the acquired range can be 25 meters, the weight information of the direction information for the line semantic element can be 1.5.

At a step 206, the optimal heading information of the vehicle is determined by combining the direction information for the point semantic element, the direction information for the line semantic element, and the direction weight information.

After the direction weight information is determined, the optimal heading information of the vehicle can be determined by combining the direction information for the point semantic element, the direction information for the line semantic element, and the direction weight information. Specifically, the optimal heading information can be determined by a following formula:

$$F_{theta} = F_{p\_theta} + \lambda 1 * F_{l\_theta}$$

Where $F_{theta}$ can be the optimal heading information obtained based on the direction weight information, and $\lambda 1$ can be the direction weight information.

At a step 207, position information for the point semantic element and position information for the line semantic element are determined according to the first position information, the second position information, and the optimal heading information.

After the optimal heading information is determined, the position information of the point semantic element, which can be specifically $F_{p\_loc}$, can be determined according to the coordinate information of the point semantic element and the optimal heading information; and lateral position information of the line semantic element, which can be specifically $F_{l\_joc}$, can be determined according to the position information of the midpoint of the line semantic element and the optimal heading information.

At a step 208, position weight information corresponding to the position information for the line semantic element is determined.

After the lateral position information is determined, the weight information of the lateral position information of the line semantic element can be determined according to the acquired range of the sensing apparatus in the vehicle. For example, when the acquired range can be 25 meters, the weight information of the direction information for the line semantic element can be 1.

At a step 209, optimal heading information of the vehicle is determined by combining the position information for the point semantic element, the position information for the line semantic element, and the position weight information.

After the position weight information is determined, the optimal position information of the vehicle can be determined by combining the position information for the point semantic element, the lateral position information for the line semantic element, and the position weight information. Specifically, the optimal position information can be determined by a following formula:

$$F_{loc} = F_{p\_loc} + \lambda 2 * F_{l\_loc}$$

Where $F_{loc}$ can be the optimal position information obtained based on the direction weight information, and $\lambda 2$ can be the position weight information.

After the optimal position information is determined, the optimal heading information of the vehicle can be determined based on the optimal heading information and the optimal position information. That is, positioning information of the vehicle can be determined in the first map data according to the optimal heading information and the optimal position information.

In the embodiment of the present invention, the determining of the optimal heading information and the optimal position information is achieved based on points and lines by: obtaining preset first map data and second map data acquired in real time; determining a first semantic element according to the first map data, and determining first direction information and first position information corresponding to the first semantic element; determining a second semantic element according to the second map data, and determining second direction information and second position information corresponding to the second semantic element; determining direction information for the point semantic element and direction information for the line semantic element according to the first direction information and the second direction information; determining direction weight information corresponding to the direction information for the line semantic element; determining the optimal heading information of the vehicle by combining the direction information for the point semantic element, the direction information for the line semantic element, and the direction weight information; determining position information for the point semantic element and position information for the line semantic element according to the first position information, the second position information, and the optimal heading information; determining position weight information corresponding to the position information for the line semantic element; and determining optimal heading information of the vehicle by combining the position information for the point semantic element, the position information for the line semantic element, and the position weight information. Accuracy of the optimal heading information and the optimal position information is improved. In addition, positioning error of the vehicle is reduced by performing the positioning based on the optimal heading information and the optimal position information and positioning accuracy of the vehicle is improved.

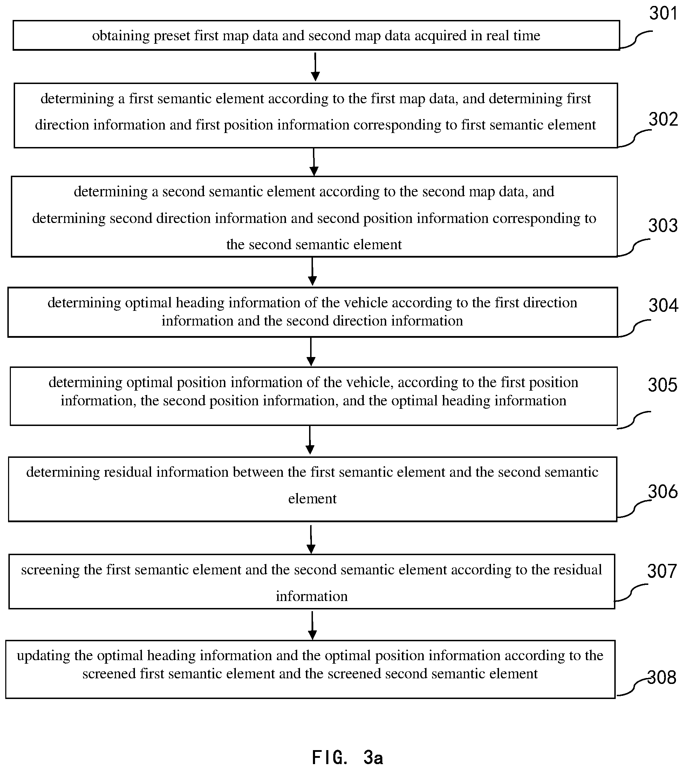

Referring to Fig. 3a, it is a flow chart of steps of still another method for positioning vehicle in accordance with an embodiment of the present invention, which may specifically include the following steps:

At a step 301, preset first map data and second map data acquired in real time are obtained.

At a step 302, a first semantic element is determined according to the first map data, and first direction information and first position information corresponding to the first semantic element are determined.

At a step 303, a second semantic element is determined according to the second map data, and second direction information and second position information corresponding to the second semantic element are determined.

At a step 304, optimal heading information of the vehicle is determined according to the first direction information and the second direction information.

At a step 305, optimal position information of the vehicle is determined according to the first position information, the second position information, and the optimal heading information.

At a step 306, residual information between the first semantic element and the second semantic element is determined.

The residual information may be position error and direction error between the first semantic element and the second semantic element.

After the optimal heading information and the optimal position information are determined, the positioning information of the vehicle can be determined in the first map data according to the optimal heading information and the optimal position information. For example, all the semantic elements in the second map data are deflected and displaced according to a transformation matrix corresponding to the optimal heading information and a displacement amount corresponding to the optimal position information.

However, due to sensing error of a sensing apparatus in the vehicle or labeling error of the map, the second map data that is basically consistent with the first map data cannot be obtained after all the semantic elements are deflected and displaced. Thus, the residual information between the first map data and the second map data, that is, the position error information and the direction error information between the first semantic element and the second semantic element can be determined.

At a step 307, the first semantic element and the second semantic element is screened according to the residual information.

After the residual information is determined, it can be determined whether the residual information is greater than a preset threshold or not. If the position error is greater than 0.5 meters and the direction error is greater than 3 degrees, semantic elements whose residual information is greater than the preset threshold can be eliminated.

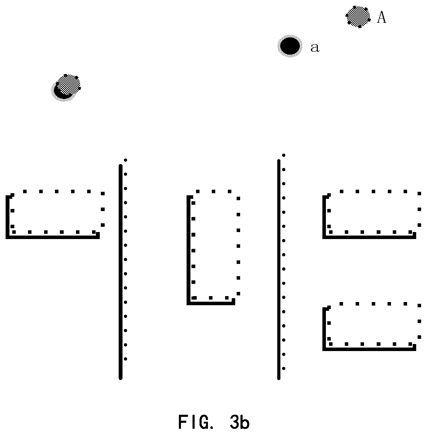

As shown in FIG. 3b, solid black lines and solid black points may be line semantic elements and point semantic elements in the first map data, and black dotted lines and points containing the dotted lines may be line semantic elements and point semantic elements in the second map data. The residual information between a point semantic element **a** in the first map data and a point semantic element **A** in the second map data is greater than the preset threshold, then the point semantic element **a** and the point semantic element **A** can be eliminated.

At a step 308, the optimal heading information and the optimal position information are updated according to the screened first semantic element and the screened second semantic element.

After screening the semantic elements, the method can be returned to the step 304 which is performed to update the optimal heading information and the optimal position information until the residual information between the first semantic element and the second semantic element is smaller than the preset threshold. The positioning information of the vehicle is determined according to the updated optimal heading information and the updated optimal position information, and the position information and heading information of the vehicle are output externally.

In the embodiment of the present invention, the updating of the optimal heading information and the optimal position information is achieved by: obtaining preset first map data and second map data acquired in real time; determining a first semantic element according to the first map data, and determining first direction information and first position information corresponding to the first semantic element; determining a second semantic element according to the second map data, and determining second direction information and second position information corresponding to the second semantic element; determining optimal heading information of the vehicle according to the first direction information and the second direction information; determining optimal position information of the vehicle, according to the first position information, the second position information, and the optimal heading information; determining residual information between the first semantic element and the second semantic element; screening the first semantic element and the second semantic element according to the residual information; and updating the optimal heading information and the optimal position information according to the screened first semantic element and the screened second semantic element. Positioning error of the vehicle is reduced by performing the positioning based on the optimal heading information and the optimal position information and positioning accuracy of the vehicle is improved.

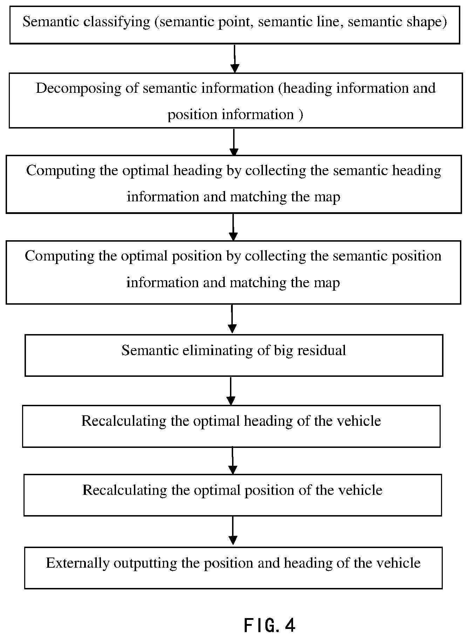

The embodiment of the present invention is exemplarily described below with reference to FIG. 4 :

1. After obtaining at least two map data, the semantic elements in the at least two map data can be classified respectively, such as point semantics are classified into one class, line semantics are classified into one class, and shape semantics are classified into one class, and shape semantics are decomposed into the point semantics and the line semantics;

2. After classifying, the semantic information in the semantic elements can be decomposed, such as determining the heading information and position information of the semantic elements in turn;

3. After the heading information of the semantic elements is determined, matching semantic elements can be determined in the at least two map data, and with respect to the heading information, an optimal heading calculation is performed on the matching semantic elements;

4. After determining the heading information and position information of the semantic elements, matching semantic elements can be determined in the at least two map data, and with respect to the position information, an optimal position calculation is performed on the matching semantic elements;

5. After calculating the optimal heading and the optimal position, the positioning of the vehicle can be determined according to the optimal heading and the optimal position, and residual information between the semantic elements in the at least two map data can be determined according to the positioning, so as to eliminate the semantic elements whose residual information is larger than a preset threshold;
6. After eliminating the semantic elements, the optimal heading can be recalculated according to the matching semantic elements after the eliminating;
7. After eliminating the semantic elements, the optimal position can be recalculated according to the matching semantic elements after the eliminating; and
8. After the optimal heading and the optimal position are determined, the positioning of the vehicle can be determined according to the optimal heading and the optimal position, and the heading and position of the vehicle can be output externally.

It should be noted that, for the sake of simple description, the method embodiments are described as a combination of a series of actions, but it should be understood for those skilled in the art that the embodiments of the present invention are not limited by the sequences of the described actions, because in accordance with embodiments of the present invention, certain steps may be performed in other sequences or simultaneously. Secondly, it should also be understood for those skilled in the art that the embodiments described in the specification are all preferred embodiments, and the actions involved are not necessarily required by the embodiments of the present invention.

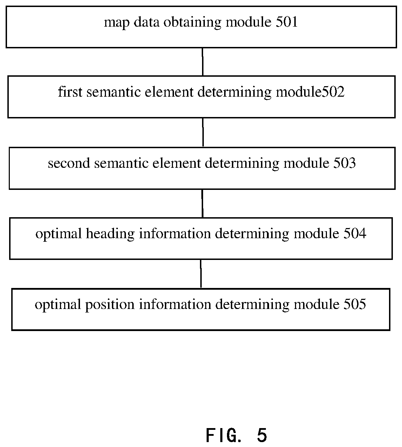

Referring to FIG. 5, it shows a schematic structural diagram of a device for positioning vehicle in accordance with an embodiment of the present invention, which can specifically include following modules:

a map data obtaining module 501, configured to obtain preset first map data and second map data acquired in real time;
a first semantic element determining module 502, configured to determine a first semantic element according to the first map data, and to determine first direction information and first position information corresponding to the first semantic element;
a second semantic element determining module 503, configured to determine a second semantic element according to the second map data, and to determine second direction information and second position information corresponding to the second semantic element;
an optimal heading information determining module 504, configured to determine optimal heading information of the vehicle according to the first direction information and the second direction information; and
an optimal position information determining module 505, configured to determine the optimal position information of the vehicle according to the first position information, the second position information, and the optimal heading information.

In an embodiment of the present invention, the first semantic element includes a first point semantic element. The first semantic element determining module 502 includes:

a first barycentric information determining sub module, configured to determine first barycentric information corresponding to a plurality of point semantic elements including the first point semantic element; and
a first direction information determining sub module, configured to determine first direction information corresponding to the first point semantic element according to the first barycentric information.

In an embodiment of the present invention, the second semantic element includes a second point semantic element. The second semantic element determining module 503 includes:

a second barycentric information determining sub module, configured to determine second barycentric information corresponding to a plurality of point semantic elements including the second point semantic element; and
a second direction information determining sub module, configured to determine second direction information corresponding to the second point semantic element according to the second barycentric information.

In an embodiment of the present invention, the first semantic element includes a first line semantic element. The first position information includes first lateral position information. The first semantic element determining module 502 includes:

a first midpoint position information determining sub module, configured to determine first midpoint position information corresponding to the first line semantic element; and
a first lateral position information determining sub module, configured to determine first lateral position information corresponding to the first line semantic element according to the first midpoint position information.

In an embodiment of the present invention, the second semantic element includes a second line semantic element. The second position information includes second lateral position information. The second semantic element determining module 503 includes:

a second midpoint position information determining sub module, configured to determine second midpoint position information corresponding to the second line semantic element; and
a second lateral position information determining sub module, configured to determine second lateral position information corresponding to the second line semantic element according to the second midpoint position information.

In an embodiment of the present invention, the optimal heading information determining module 504 includes:

a direction information determining sub module, configured to determine direction information for the point semantic element and direction information for the line semantic element according to the first direction information and the second direction information;

a direction weight information determining sub module, configured to determine direction weight information corresponding to the direction information for the line semantic element; and

a direction information combining sub module, configured to determine the optimal heading information of the vehicle by combining the direction information for the point semantic element, the direction information for the line semantic element, and the direction weight information.

In an embodiment of the present invention, the optimal position information determining module 505 includes:

a position information determining sub module, configured to determine the position information for the point semantic element and the position information for the line semantic element according to the first position information, the second position information, and the optimal heading information;

a position weight information determining sub module, configured to determine the position weight information corresponding to the position information for the line semantic element; and

a position information combining sub module, configured to determine the optimal heading information of the vehicle by combining the position information for the point semantic element, the position information for the line semantic element, and the position weight information.

In an embodiment of the present invention, the first semantic element determining module 502 includes:

a first semantic element classifying sub module, configured to classify the semantic elements in the first map data; and

a first semantic element generating sub module, configured to generate a first point semantic element and a first line semantic element corresponding to a first shape semantic element in the first map data.

In an embodiment of the present invention, the second semantic element determining module 503 includes:

a second semantic element classifying sub module, configured to classify the semantic elements in the second map data; and

a second semantic element generating sub module, configured to generate a second point semantic element and a second line semantic element corresponding to a second shape semantic element in the second map data.

In an embodiment of the present invention, the device for positioning vehicle also includes:

a residual information determining module, configured to determine residual information between the first semantic element and the second semantic element;

a semantic element screening module, configured to screen the first semantic element and the second semantic element according to the residual information; and

an updating module, configured to update the optimal heading information and the optimal position information according to the screened first semantic element and the screened second semantic element.

In the embodiment of the present invention, the determining of the optimal heading information and the optimal position information is achieved by: obtaining preset first map data and second map data acquired in real time; determining a first semantic element according to the first map data, and determining first direction information and first position information corresponding to the first semantic element; determining a second semantic element according to the second map data, and determining second direction information and second position information corresponding to the second semantic element; determining optimal heading information of the vehicle according to the first direction information and the second direction information; determining optimal position information of the vehicle according to the first position information, the second position information, and the optimal heading information; determining residual information between the first semantic element and the second semantic element; screening the first semantic element and the second semantic element according to the residual information; and updating the optimal heading information and the optimal position information according to the screened first semantic element and the screened second semantic element. Positioning error of the vehicle is reduced by performing the positioning based on the optimal heading information and the optimal position information and positioning accuracy of the vehicle is improved.

An embodiment of the present invention also provides a vehicle, which can include a processor, a memory, and a computer program stored in the memory and capable of being executed on the processor, wherein the computer program when executed by the processor implements any of the methods for positioning vehicle as described above.

An embodiment of the present invention further provides a computer-readable storage medium, wherein a computer program is stored on the computer-readable storage medium, and the computer program when executed by a processor implements any of the methods for positioning vehicle as described above.

With regard to the device embodiments, since they are substantially similar to the corresponding method embodiments, they are described in a relatively simple manner herein. Reference can be made to the corresponding parts of the method embodiments.

The various embodiments in the specification are described in a progressive manner, and each embodiment focuses on the differences from other embodiments, and the same or similar parts between the various embodiments can refer to each other.

It should be understood by those skilled in the art that the embodiments of the present invention may be provided as a method, an apparatus, or a computer program product. Therefore, the embodiments of the present invention may take a form of an embodiment of complete hardware, an embodiment of complete software, or an embodiment of combined software and hardware. In addition, the embodiments of the present invention may be made in a form of computer program products implemented on one or more computer-usable storage media (including but not limited to disk storage, CD-ROM, optical storage, etc.) containing computer-usable program codes.

The embodiments of the present invention are described with reference to flowcharts and/or block diagrams of the methods, terminal devices (systems), and computer program products according to the embodiments of the present invention. It should be understood that each process and/or block in the flowchart(s) and/or block diagram(s) and the combination of processes and/or blocks in the flowchart(s) and/or block diagram(s) can be achieved by computer program instructions. These computer program instructions can be provided to the processors of general-purpose computers, special-purpose computers, embedded processors, or other programmable data processing terminal devices to produce a machine. Thereby, the instructions executed by the processor of the computer or other programmable data processing terminal devices produce means for realizing the functions specified in one or more processes in the flowchart and/or one or more blocks in the block diagram.

These computer program instructions can also be stored in a computer-readable memory that can guide a computer or other programmable data processing terminal devices to work in a specific manner, so that the instructions stored in the computer-readable memory generate an article including an instruction device, which implements the functions specified in one or more processes in the flowchart and/or one or more blocks in the block diagram.

These computer program instructions can also be loaded on a computer or other programmable data processing terminal devices, so that a series of operation steps are executed on the computer or other programmable terminal devices to generate processing implemented by the computer. Therefore, the instructions executed on the computer or other programmable terminal devices provide steps for implementing functions specified in one or more processes in the flowchart and/or one or more blocks in the block diagram.

Although the preferred embodiments of the present invention have been described above, those skilled in the art can make additional changes and modifications to these embodiments once they know the basic creative concept. Therefore, the appended claims are intended to be interpreted as including the preferred embodiments and all changes and modifications falling within the scope of the embodiments of the present invention.

Finally, it should be further noted that, in the present invention, relational terms such as "first" and "second" are merely used to distinguish one entity or operation from another entity or operation, and do not necessarily require or imply any actual relationship or subsequence between these entities or operations. Moreover, the terms "comprise", "include", or any other variants thereof are intended to cover non-exclusive inclusion, and thus a process, method, article, or terminal device including a series of elements can include other elements that are not explicitly listed in addition to these specified elements, or further include the elements inherent to this process, method, article, or terminal device. Without more specific limitations, the element defined by the expression "including a..." does not exclude the existence of other identical elements in the process, method, article, or terminal device that includes this element.

The method and device for positioning vehicle provided by the present invention have been described above in detail, and the principles and implementations of the present invention are described with specific embodiments in the specification. The descriptions of the above embodiments are only used to help understand the method of the present invention and its core idea. Meanwhile, changes or modifications may be made in these embodiments and its application scope by those skilled in the art in accordance with the concept of the present invention. Therefore, the contents in the specification cannot be considered to limit the scope of the present invention.

**Claims**

1. A method for positioning vehicle, **characterized in that** the method comprises:

   obtaining preset first map data and second map data acquired in real time;

   determining a first semantic element according to the first map data, and determining first direction information and first position information corresponding to the first semantic element;

   determining a second semantic element according to the second map data, and determining second direction information and second position information corresponding to the second semantic element;

   determining optimal heading information of the vehicle according to the first direction information and the second direction information; and

   determining optimal position information of the vehicle according to the first position information, the second position information, and the optimal heading information.

2. The method according to claim 1, **characterized in that** the first semantic element comprises a first point semantic element, and the step of determining the first direction information corresponding to the first semantic element comprises:

   determining first barycentric information corresponding to a plurality of point semantic elements comprising the first point semantic element; and

   determining the first direction information corresponding to the first point semantic element, according to the first barycentric information;

   wherein the second semantic element comprises a second point semantic element, and the step of determining the second direction information corresponding to the second semantic element comprises:

   determining second barycentric information corresponding to a plurality of point semantic elements comprising the second point semantic element; and

   determining the second direction information corresponding to the second point semantic element, according to the second barycentric information.

3. The method according to claim 2, **characterized in that** the first semantic element further comprises a first line semantic element, the first position information comprises first lateral position information, and the step of determining the first position information corresponding to the first semantic element comprises:

   determining first midpoint position information corresponding to the first line semantic element; and

   determining the first lateral position information corresponding to the first line semantic element, according to the first midpoint position information;

   wherein the second semantic element further comprises a second line semantic element, the second position information comprises second lateral position information, and the step of determining the second position information corresponding to the second semantic element comprises:

   determining the second midpoint position information corresponding to the second line semantic element; and

   determining the second lateral position information corresponding to the second line semantic element, according to the second midpoint position information.

4. The method according to claim 1, 2 or 3, **characterized in that** the step of determining the optimal heading information of the vehicle according to the first direction information and the second direction information comprises:

   determining direction information for the point semantic element and direction information for the line semantic element, according to the first direction information and the second direction information;

   determining direction weight information corresponding to the direction information for the line semantic element; and

   determining the optimal heading information of the vehicle by combining the direction information for the point semantic element, the direction information for the line semantic element, and the direction weight information.

5. The method according to claim 4, **characterized in that** the step of determining the optimal position information of the vehicle according to the first position information, the second position information, and the optimal heading information comprises:

   determining position information for the point semantic element and position information for the line semantic element according to the first position information, the second position information, and the optimal heading information;

   determining position weight information corresponding to the position information for the line semantic element; and
determining the optimal heading information of the vehicle by combining the position information for the point semantic element, the position information for the line semantic element, and the position weight information.

6. The method according to claim 4, **characterized in that** the step of determining the first semantic element according to the first map data comprises:

classifying semantic elements in the first map data;
generating a first point semantic element and a first line semantic element corresponding to a first shape semantic element in the first map data;
wherein the step of determining of the second semantic element according to the second map data comprises:

classifying semantic elements in the second map data;
generating a second point semantic element and a second line semantic element corresponding to a second shape semantic element in the second map data.

7. The method of claim 1, further comprising:

determining residual information between the first semantic element and the second semantic element;
screening the first semantic element and the second semantic element according to the residual information; and
updating the optimal heading information and the optimal position information according to the screened first semantic element and the screened second semantic element.

8. A device for positioning vehicle, **characterized in that** the device comprises:

a map data obtaining module, configured to obtain preset first map data and second map data acquired in real time;
a first semantic element determining module, configured to determine a first semantic element according to the first map data, and to determine first direction information and first position information corresponding to the first semantic element;
a second semantic element determining module, configured to determine a second semantic element according to the second map data, and to determine second direction information and second position information corresponding to the second semantic element;
an optimal heading information determining module, configured to determine optimal heading information of the vehicle according to the first direction information and the second direction information; and
an optimal position information determining module, configured to determine optimal position information of the vehicle according to the first position information, the second position information, and the optimal heading information.

9. The device according to claim 8, **characterized in that** the optimal heading information determining module comprises:

a direction information determining sub module, configured to determine direction information for the point semantic element and direction information for the line semantic element according to the first direction information and the second direction information;
a direction weight information determining sub module, configured to determine direction weight information corresponding to the direction information for the line semantic element; and
a direction information combining sub module, configured to determine the optimal heading information of the vehicle by combining the direction information for the point semantic element, the direction information for the line semantic element, and the direction weight information.

10. The device according to claim 8, **characterized in that** the optimal position information determining module comprises:

a position information determining sub module, configured to determine position information for the point semantic element and position information for the line semantic element according to the first position information, the second position information, and the optimal heading information;
a position weight information determining sub module, configured to determine position weight information corresponding to the position information for the line semantic element; and
a position information combining sub module, configured to determine the optimal heading information of the vehicle by combining the position information for the point semantic element, the position information for the line semantic element, and the position weight information.

11. A vehicle, **characterized in that** the vehicle comprises a processor, a memory, and a computer program stored in the memory and capable of being executed on the processor, the computer program when executed by the processor, implementing the method as clamed in any of claims 1 to 7.

12. A computer-readable storage medium, **characterized in that** a computer program is stored on the computer-readable storage medium, the computer program when executed by a processor, implementing the method as claimed in any of claims 1-7.

101

| obtaining preset first map data and second map data acquired in real time |
|---|

102

| determining a first semantic element according to the first map data, and determining first direction information and first position information corresponding to first semantic element |
|---|

103

| determining a second semantic element according to the second map data, and determining second direction information and second position information corresponding to the second semantic element |
|---|

104

| determining optimal heading information of the vehicle according to the first direction information and the second direction information |
|---|

105

| determining optimal position information of the vehicle, according to the first position information, the second position information, and the optimal heading information |
|---|

FIG. 1a

semantic point 2

semantic point 1

semantic point 1

semantic point 2

semantic point shape 1

semantic
shape 3

point

semantic
shape 3

point

semantic point shape 2

semantic point shape 1

semantic line 1

semantic line 2

semantic line 1

semantic line 2

semantic point shape 2

sensing in real time

static map

FIG. 1b

obtaining preset first map data and second map data acquired in real time ⟶ 201

determining a first semantic element according to the first map data, and determining first direction information and first position information corresponding to first semantic element ⟶ 202

determining a second semantic element according to the second map data, and determining second direction information and second position information corresponding to the second semantic element ⟶ 203

determining direction information for the point semantic element and direction information for the line semantic element, according to the first direction information and the second direction information ⟶ 204

determining direction weight information corresponding to the direction information for the line semantic element ⟶ 205

determining the optimal heading information of the vehicle by combining the direction information for the point semantic element, the direction information for the line semantic element, and the direction weight informatio ⟶ 206

determining position information for the point semantic element and position information for the line semantic element according to the first position information, the second position information, and the optimal heading information ⟶ 207

determining position weight information corresponding to the position information for the line semantic element ⟶ 208

determining the optimal heading information of the vehicle by combining the position information for the point semantic element, the position information for the line semantic element, and the position weight information ⟶ 209

FIG. 2

obtaining preset first map data and second map data acquired in real time

301

determining a first semantic element according to the first map data, and determining first direction information and first position information corresponding to first semantic element

302

determining a second semantic element according to the second map data, and determining second direction information and second position information corresponding to the second semantic element

303

determining optimal heading information of the vehicle according to the first direction information and the second direction information

304

determining optimal position information of the vehicle, according to the first position information, the second position information, and the optimal heading information

305

determining residual information between the first semantic element and the second semantic element

306

screening the first semantic element and the second semantic element according to the residual information

307

updating the optimal heading information and the optimal position information according to the screened first semantic element and the screened second semantic element

308

FIG. 3a

FIG. 3b

Semantic classifying (semantic point, semantic line, semantic shape)

↓

Decomposing of semantic information (heading information and position information )

↓

Computing the optimal heading by collecting the semantic heading information and matching the map

↓

Computing the optimal position by collecting the semantic position information and matching the map

↓

Semantic eliminating of big residual

↓

Recalculating the optimal heading of the vehicle

↓

Recalculating the optimal position of the vehicle

↓

Externally outputting the position and heading of the vehicle

FIG. 4

map data obtaining module 501

first semantic element determining module502

second semantic element determining module 503

optimal heading information determining module 504

optimal position information determining module 505

FIG. 5

## INTERNATIONAL SEARCH REPORT

| | |
|---|---|
| | International application No. |
| | **PCT/CN2020/126931** |

**A. CLASSIFICATION OF SUBJECT MATTER**

G01C 21/32(2006.01)i; G01C 21/34(2006.01)i; G01S 19/42(2010.01)i; G01S 15/06(2006.01)i; G01S 15/86(2020.01)i; G01S 17/06(2006.01)i; G01S 17/86(2020.01)i

According to International Patent Classification (IPC) or to both national classification and IPC

**B. FIELDS SEARCHED**

Minimum documentation searched (classification system followed by classification symbols)

G01C; G01S

Documentation searched other than minimum documentation to the extent that such documents are included in the fields searched

Electronic data base consulted during the international search (name of data base and, where practicable, search terms used)

CNPAT; CNKI; WPI; EPODOC: 广州小鹏自动驾驶科技有限公司, 定位, 第一, 第二, 地图, 预置, 实时, 图像, 语义, 方向, 位置, 航向, location, first, second, map, semantic, image, direction, position, course

**C. DOCUMENTS CONSIDERED TO BE RELEVANT**

| Category* | Citation of document, with indication, where appropriate, of the relevant passages | Relevant to claim No. |
|---|---|---|
| X | CN 110147705 A (BEIJING MOMENTA TECHNOLOGY CO., LTD.) 20 August 2019 (2019-08-20)<br>description, paragraphs 62-92, 118-149, 178-201, figures 1, 3, 6 | 1-3, 7, 8, 11, 12 |
| A | CN 111351493 A (SHANGHAI O-FILM INTELLIGENT VEHICLE ASSOCIATION TECHNOLOGY CO., LTD.) 30 June 2020 (2020-06-30)<br>entire document | 1-12 |
| A | CN 111508258 A (BEIJING SCIENCE AND TECHNOLOGY CO., THREE FAST ONLINE) 07 August 2020 (2020-08-07)<br>entire document | 1-12 |
| A | CN 111521186 A (GUANGZHOU XIAOPENG VEHICLE NETWORKING TECHNOLOGY CO., LTD.) 11 August 2020 (2020-08-11)<br>entire document | 1-12 |
| A | CN 110967018 A (ZEBRED NETWORK TECHNOLOGY CO., LTD.) 07 April 2020 (2020-04-07)<br>entire document | 1-12 |

☑ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 July 2021** | **21 July 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

# EP 4 123 263 A1

**INTERNATIONAL SEARCH REPORT**

International application No.

**PCT/CN2020/126931**

**C.** **DOCUMENTS CONSIDERED TO BE RELEVANT**

| Category* | Citation of document, with indication, where appropriate, of the relevant passages | Relevant to claim No. |
|---|---|---|
| A | CN 111220164 A (BEIJING BAIDU NETCOM SCIENCE AND TECHNOLOGY CO., LTD.) 02 June 2020 (2020-06-02) entire document | 1-12 |
| A | CN 110118564 A (ZONGMU TECHNOLOGY (SHANGHAI) LIMITED COMPANY) 13 August 2019 (2019-08-13) entire document | 1-12 |
| A | CN 109949609 A (GUANGZHOU XIAOPENG MOTORS TECHNOLOGY COMPANY LTD.) 28 June 2019 (2019-06-28) entire document | 1-12 |
| A | WO 2020069126 A1 (ZOOX INC.) 02 April 2020 (2020-04-02) entire document | 1-12 |

Form PCT/ISA/210 (second sheet) (January 2015)

26

**INTERNATIONAL SEARCH REPORT**
Information on patent family members

International application No.

**PCT/CN2020/126931**

| Patent document cited in search report | | | Publication date (day/month/year) | Patent family member(s) | | | Publication date (day/month/year) |
|---|---|---|---|---|---|---|---|
| CN | 110147705 | A | 20 August 2019 | None | | | |
| CN | 111351493 | A | 30 June 2020 | None | | | |
| CN | 111508258 | A | 07 August 2020 | None | | | |
| CN | 111521186 | A | 11 August 2020 | None | | | |
| CN | 110967018 | A | 07 April 2020 | None | | | |
| CN | 111220164 | A | 02 June 2020 | None | | | |
| CN | 110118564 | A | 13 August 2019 | None | | | |
| CN | 109949609 | A | 28 June 2019 | CN | 109949609 | B | 13 November 2020 |
| WO | 2020069126 | A1 | 02 April 2020 | US | 10782136 | B2 | 22 September 2020 |
| | | | | US | 2020103236 | A1 | 02 April 2020 |
| | | | | US | 2021041250 | A1 | 11 February 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011105411